# EUROPEAN PATENT SPECIFICATION

(11) **EP 1 535 666 B1**
(45) Date of publication and mention of the grant of the patent: **14.11.2007**
(21) Application number: 04021947.9
(22) Date of filing: 15.09.2004
(51) Int. Cl.: B01L 3/00, G01N 1/00

(54) **Microchannel array component, microchannel array for recovering biomolecules, and method for recovering biomolecules**
Mikrokanalreihenkomponente, Mikrokanalreihen zur Rückgewinnung von Biomolekülen und Verfahren zur Rückgewinnung von Biomolekülen
Composant d'un réseau de microcanaux, réseau de microcanaux utilisé pour récupérer des biomolécules et méthode de récupération des biomolécules

(30) Priority: 27.11.2003 JP 2003396915
(43) Date of publication of application: 01.06.2005
(73) Proprietor: HITACHI SOFTWARE ENGINEERING CO., LTD., Yokohama-shi, Kanagawa 230-0045 (JP)
(72) Inventor: Kogi, Osamu, Hitachi Software Engineering Co. Ltd., Shinagawa-ku, Tokyo 140-0002 (JP)
(74) Representative: Liesegang, Eva

(56) References cited:
- EP-A1- 0 978 722
- WO-A1-03/095469
- WO-A1-20/04071641
- US-A1- 2002 090 641
- US-B1- 6 576 478

## Description

### BACKGROUND OF THE INVENTION

### Field of the Invention

The present invention relates to a method of recovering biomolecules using a microchannel array according to the preamble of claim 1. A method of this type is described in US 6,576,478 B1.

### Background Art

As an effective method for examining the expression state of genes, DNA probe arrays or DNA chips have begun to be used, in which many DNA probes divided by type are fixed on the surface of a solid body. JP Patent Publication (Kokai) No. 11-243997 A (1999) discloses an invention of a probe array. In the probe array, particles (probe particles) on which various types of probes are fixed are arranged in a certain order. Specifically, a plurality of tubules or grooves filled with various types of probe particles are arranged in parallel, and then, by injecting each single particle from each tubule or groove into another tubule or groove, a probe array is prepared in which various types of probe particles are constantly arranged in a certain order. By using the probe array, various types of probes are bound to particles having different particle sizes, and various types of fluorescence-labeled DNA are simultaneously measured.
WOOO/04390 discloses methods of recovering bio-molecules (e.g. antibodies) using the standard purification methods that include the following: panning on an immobilized antigen; panning on an immobilized antigen using specific elution; a using biotinylated antigen and then selecting on a streptavidin resin or streptavidin-coated magnetic beads; affinity purification; selection on Western blots (especially useful for unknown antigens or antigens difficult to purify). WO0004390 also discloses a method of screening using a microchannel array almost identical to that of present application; comprising:
a first substrate which made of soft material (page 18, paragraph 2); and
a microchannel disposed on said first substrate (claim 1(a) and (b)), wherein various type of probes molecules are fixed by chemical bonding on an undersurface and/or a wall surface of said microchannel in a desired sequence in the form of spots.

By the technology described in JP Patent Publication (Kokai) No. 11-243997 A (1999), a capillary bead array is manufactured in which various types of probe molecules are fixed on the surface of beads that are arranged in a channel such as a glass capillary in a desired order. And then a sample solution including biomolecules that are the objects of analysis is poured into the capillary bead array. By binding the biomolecules as the objects of analysis to the probe molecules fixed on the surface of beads and having a high affinity for such bio-molecules, the biomolecules as the objects of analysis can be fixed on the surface of the beads and can then be analyzed.
However, using the capillary bead array of this type, it is significantly difficult to selectively remove beads on which the biomolecules as the objects of analysis are fixed. Consequently, it is significantly difficult to selectively recover such biomolecules. Therefore, a technology is required by which biomolecules as the objects of analysis that are included in sample solutions in minute amounts can be selectively recovered.

### SUMMARY OF THE INVENTION

It is an object of the present invention to provide a method for effectively separating and recovering biomolecules as objects of analysis that are included in sample solutions in minute amounts depending on affinity for various probe molecules.
The present invention provides a method for recovering biomolecules using a microchannel array according to claim 1. By providing the microchannel array in a material such as soft resin, a biomolecule bound to a probe molecule in each specific position can be cut, separated, and recovered, so that the biomolecule can be used for inspection and analysis or another subsequent treatment process. The cut piece in which probe molecules are fixed can be subjected to fluorescent measurement, using a flow meter, for example, in the same manner as that used for conventional beads. In this case, since the cutting order is specified, there is no need for arrangement in a fixed order or sequence, as in the case of beads. In addition, according to the present invention, it is easy to cut only a desired portion for measurement.

In one embodiment, the present invention provides a microchannel array for recovering biomolecules, which is manufactured by combining the aforementioned microchannel array component with a second substrate. The microchannel array component comprises the microchannel prepared on the first substrate, which is made of a soft material such as soft resin that can be readily cut with a sharp tool, and various types of probe molecules fixed on an undersurface and/or a wall surface of the microchannel in the form of spots by chemical bonding in a desired sequence. The second substrate comprises periodic protrusions of such dimensions that they can be fitted in the microchannel of the microchannel array component. The microchannel array for recovering biomolecules has the spots in which various types of probe molecules are fixed in the microchannel, and periodic protrusions. By disposing the periodic protrusions in the microchannel, a sample solution including biomolecules poured into the microchannel can be stirred, causing turbulence, thereby improving the efficiency of binding to the probe molecules. Moreover, by combining the array component with the second substrate, the structure of the array for recovering biomolecules can be simplified, so that the manufacturing costs can be reduced.

The form of protrusions disposed in the microchannel is not particularly limited. Cylindrical, rectangular columnar, conical, plate-like or corrugated walls or top surfaces, for example, may be used such that they can stir the sample solution poured into the microchannel as the protrusions obstruct the flow of the sample solution, and causing turbulence.

The sample solution including the biomolecules as the objects of recovery is poured into the microchannel of the microchannel array. By means of the periodic protrusions disposed in the microchannel, the sample solution is efficiently stirred while causing turbulence, and the biomolecules as the objects of recovery included in the sample solution are promptly bound to the probe molecules that are fixed in an undersurface and/or a wall surface of the microchannel in the form of spots and that have a high affinity for such biomolecule.

Thereafter, the substrate having the periodic protrusions is separated from the microchannel array component, and then, in a microchannel of the microchannel array component, a portion in which the probe molecules that are bound to the biomolecules as the objects of recovery are fixed is cut, using a tool such as a sharp cutting knife.

By chemically treating the piece cut from the substrate so as to cut the bonding between the probe molecules fixed on the surface of the piece and the biomolecules as the objects of recovery, the biomolecules are recovered. Thus, only a specific type of biomolecules can be efficiently recovered.

According to the present invention, biopolymers included in a sample solution in minute amounts can be readily and reliably separated in accordance with affinity for various types of probe molecules, and can be recovered. Namely, a significantly effective tool can be provided for users who are engaged in research and development in life sciences.

### BRIEF DESCRIPTION OF THE DRAWINGS

Fig. 1 schematically shows a method of manufacturing a microchannel array provided with-spots in which various types of probe-molecules are fixed, and periodic protrusions.
Fig. 2 schematically shows a method of manufacturing a microchannel array provided with spots in which various types of probe molecules are fixed, and periodic protrusions.
Fig. 3 schematically shows a method of manufacturing a microchannel array provided with spots in which various types of probe molecules are fixed, and periodic protrusions.
Fig. 4 schematically shows a microchannel array provided with spots in which various types of probe molecules are fixed, and periodic protrusions.
Fig. 5 schematically shows a sample solution including biomolecules as the objects of recovery being poured into a microchannel array of the present invention.
Fig. 6 schematically shows a method by which probe molecules and biomolecules are recovered from a microchannel array.
Fig. 7 schematically shows a method by which probe molecules and biomolecules are recovered from a microchannel array.
Fig. 8 schematically shows an operation by which biomolecules as the objects of recovery are recovered from a small piece that is cut from a microchannel array.

### DESCRIPTION OF THE PREFERRED EMBODIMENTS

An embodiment of the present invention is described in detail below with reference to the drawings.

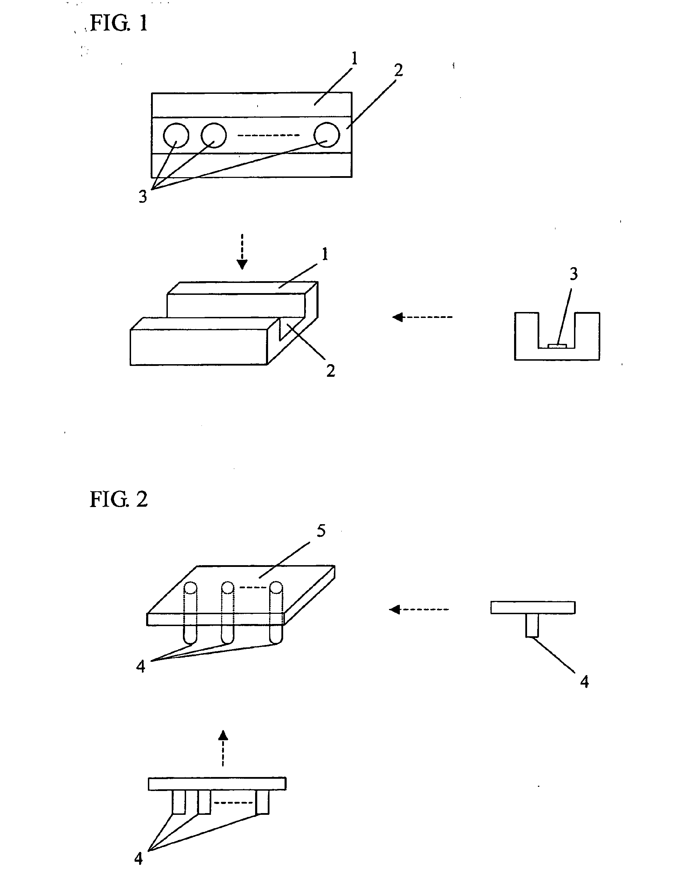

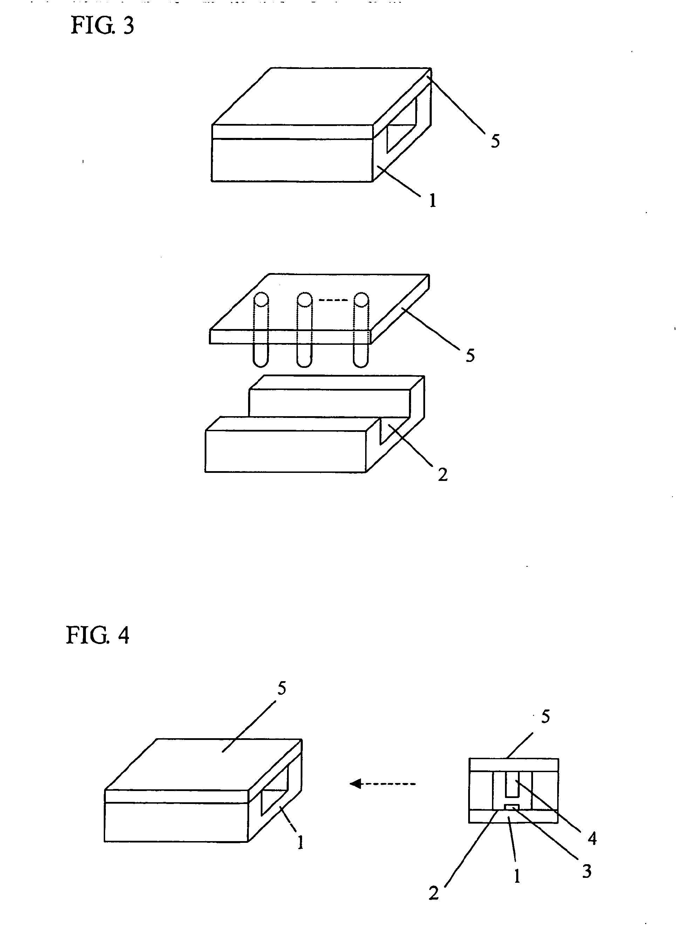

Figs. 1 to 3 schematically show a method of manufacturing a channel structure provided with spots in which various types of probe molecules are fixed, and periodic protrusions. Fig. 4 schematically shows a microchannel array provided with spots in which various types of probe molecules are fixed, and periodic protrusions.

Fig. 1 shows a perspective, a plan, and a lateral view of a first substrate 1. A microchannel 2 is prepared on the first substrate 1, which is made of a material such as soft resin, which can be readily cut with a sharp tool. On an undersurface and/or a wall surface of the microchannel (the undersurface in the example of Fig. 1), spots 3 are prepared, in which various types of probe molecules are fixed by chemical bonding in a desired sequence. Fig. 2 shows a perspective, a front, and a lateral view of a second substrate 5 provided with periodic protrusions 4. Fig. 3 shows perspective views of the second substrate 5 having been fitted in the microchannel 2 of the first substrate 1, and the manner of fitting. Fig. 4 shows a perspective view in which the second substrate 5 is fitted in the microchannel 2 of the first substrate 1, and a cross-section view. By combining the microchannel 2 of the first substrate 1 with the substrate 5 of such dimensions that it can be fitted in the microchannel 2, the substrate 5 having the periodic protrusions 4 (cylindrical protrusions in Figs. 2 and 3), a microchannel array is manufactured that has the spots 3 in which various types of probe molecules are fixed, and periodic protrusions 4. The positional relationship of the spots 3 the periodic protrusions 4 is not especially limited. They may or may not be disposed in a corresponding manner.

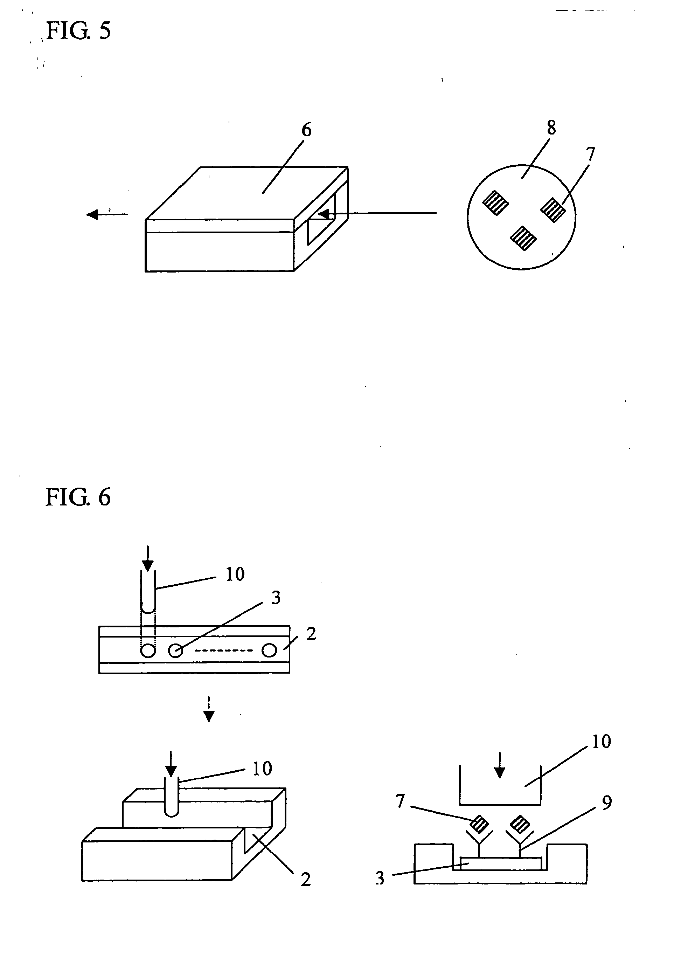

Fig. 5 schematically shows how a sample solution 8 including biomolecules as the objects of recovery is poured into the microchannel array 6. The sample solution 8 including biomolecules 7 as the objects of recovery is poured into the microchannel array 6 explained in Figs. 1 to 4. The sample solution 8 is efficiently stirred by the periodic protrusions in the microchannel of the microchannel array 6 such that the biomolecules 7 as the objects of recovery included in the sample solution 8 are promptly bound to the probe molecules that are fixed on the wall surfaces of the microchannel in spots and that have a high affinity for the biomolecules 7.

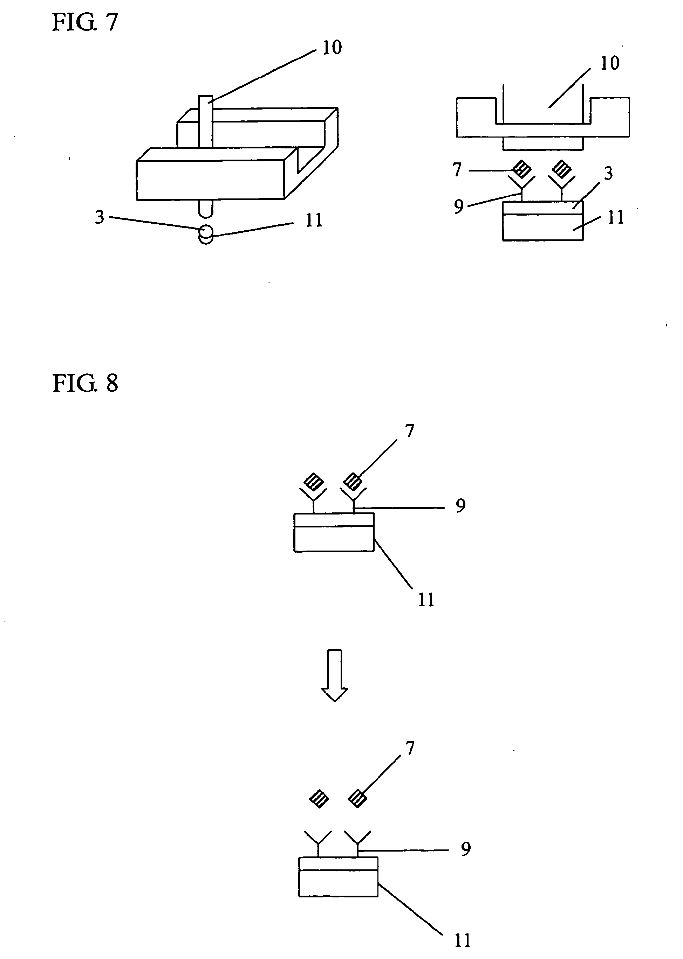

Figs. 6 and 7 schematically show perspective, plan, and cross-sectional views of a method by which the probe molecules and the biomolecules as the objects of recovery are recovered from the microchannel array. An aqueous solution including the biomolecules 7 as the objects of recovery is poured into the microchannel array. After the biomolecules 7 are bound to the probe molecules 9 that are fixed on the walls surface of the microchannel in spots and that have a high affinity for the biomolecules 7, the second substrate provided with the periodic protrusions is removed from the microchannel array. A portion of the microchannel 2 in the microchannel array that includes the spot 3 at which the probe molecules 9 that are bound to the biomolecules 7 as the objects of recovery for the first substrate are fixed, is cut with a sharp cutting knife 10, thereby obtaining a small piece 11 that retains on the surface the probe molecules 9 to which the biomolecules 7 are bound. The thus cut-out piece 11, as shown in Fig. 7, may be taken out by penetrating through the first substrate or may be removed from the cutting knife 10 to which the cut piece 11 has adhered.

Fig. 8 schematically shows an operation by which biomolecules as the objects of recovery are recovered from the small piece that is cut from the microchannel array. In Fig. 8, the piece 11 that is cut from the channel structure retains the probe molecules 9 on the surface thereof, and the biomolecules 7 as the objects of recovery are bound to the probe molecules 9. The cut piece 11 is then chemically treated so as to cut the bonding between the probe molecules 9 and the biomolecules 7 as the objects of recovery, thereby recovering the biomolecules 7.

According to the present invention, a biopolymer included in a sample solution in minute amounts can be readily and reliably separated in accordance with affinity for various types of probe molecules, and then be recovered. Namely, the invention provides an effective tool for users who are engaged in research and development in life sciences. The present invention can therefore contribute to the progress of life sciences, and the development of medical diagnosis and medicines.

## Claims

1. A method for recovering biomolecules using a microchannel array comprising at least one microchannel (2), comprising the steps of:
delivering a sample solution including biomolecules as the objects of recovery to the microchannel of the microchannel array, the microchannel array having spots (3) in which various types of probe molecules are fixed and periodic protrusions; and
promptly binding the biomolecules as the objects of recovery included in said sample solution to probe molecules that are fixed in the undersurface and/or the wall surface of said microchannel (2) in the form of spots (3) and that have a high affinity for said biomolecules;
**characterized by**:
following the step of binding the biomolecules cutting out, using a sharp tool, a portion of the microchannel (2) of said microchannel array component in which the probe molecules that are bound to the biomolecules as the objects of recovery are fixed.

2. The method for recovering biomolecules according to claim 1, comprising, following the step of cutting out, recovering the biomolecules by chemically treating the piece cut from the substrate so as to cut the bonding between the probe molecules and the biomolecules as the objects of recovery.

3. The method of claim 1 or 2, wherein said microchannel array comprises:
a microchannel array component comprising a first substrate (1) made of a soft material which can be readily cut with a sharp tool, on which said microchannel (2) is disposed; and
a second substrate (5) combined with said microchannel array component, the second substrate (5) having periodic protrusions (4) of such dimensions that they can be fitted in the microchannel (2) of said microchannel array component, the method further comprising:
before the step of cutting out, separating the substrate having periodic protrusions (4) from the microchannel array component.

## Patentansprüche

1. Verfahren zur Wiedergewinnung von Biomolekülen unter Verwendung eines Mikrokanal-Arrays, welches mindestens einen Mikrokanal (2) umfaßt, mit den folgenden Schritten:
Zuführen einer Probenlösung, welche Biomoleküle als Objekte der Wiedergewinnung enthält, in den Mikrokanal des Mikrokanal-Arrays, wobei das Mikrokanal-Array Spots (3) hat, an denen verschiedene Arten von Sondenmolekülen ("probe molecules") befestigt sind, und periodische Vorsprünge aufweist, und
schnelles Binden der Biomoleküle als Objekte der Wiedergewinnung, welche in der Probenlösung enthalten sind, an die Sondenmoleküle, die in der unteren Fläche und/oder der Wandfläche des Mikrokanals (2) in der Form von Spots (3) befestigt sind und die eine hohe Affinität für die genannten Biomoleküle aufweisen;
**dadurch gekennzeichnet, daß** nach dem Schritt des Bindens der Biomoleküle ein Abschnitt des Mikrokanals (2) der Mikrokanal-Array-Komponente, in welchem die Sondenmoleküle, die an die Biomoleküle als Objekte der Wiedergewinnung gebunden sind, befestigt sind, unter Verwendung eines scharfen Werkzeuges ausgeschnitten werden.

2. Verfahren zur Wiedergewinnung von Biomolekülen nach Anspruch 1, bei dem nach dem Schritt des Ausschneidens die Biomoleküle wiedergewonnen werden, indem das aus dem Substrat ausgeschnittene Stück chemisch behandelt wird, um die Bindung zwischen den Sondenmolekülen und den Biomolekülen als Objekte der Wiedergewinnung zu trennen.

3. Verfahren nach Anspruch 1 oder 2, bei dem das Mikrokanal-Array folgendes umfaßt:
eine Mikrokanal-Array-Komponente, die ein erstes Substrat (1) umfaßt, welches aus einem weichen Material besteht, das leicht mit einem scharfen Werkzeug geschnitten werden kann, auf dem der Mikrokanal (2) angeordnet ist; und
ein zweites Substrat (5), welches mit der Mikrokanal-Array-Komponente kombiniert ist, wobei das zweite Substrat (5) periodische Vorsprünge (4) mit derartigen Abmessungen
umfaßt, daß sie in dem Mikrokanal (2) der Mikrokanal-Array-Komponente gepaßt werden können, wobei das Verfahren vor dem Schritt des Ausschneidens das Trennen des Substrats mit den periodischen Vorsprüngen (4) von der Mikrokanal-Array-Komponente umfaßt.

## Revendications

1. Procédé de récupération de biomolécules en utilisant un réseau de microcanaux comprenant au moins un microcanal (2), comprenant les étapes suivantes :
fournir une solution échantillon incluant des biomolécules en tant qu'objets à récupérer dans le microcanal du réseau de microcanaux, le réseau de microcanaux comprenant des positions (3) auxquelles divers types de molécules sonde sont fixés et des saillies périodiques ; et
lier rapidement les biomolécules en tant qu'objets à récupérer inclus dans la solution échantillon à des molécules sonde qui sont fixées à la surface inférieure et/ou à la paroi du microcanal (2) sous forme des positions (3) et qui présentent une forte affinité pour les biomolécules ;
**caractérisé par** :
après l'étape de liaison des biomolécules, découper, en utilisant un outil aiguisé, une partie du microcanal (2) du composant de réseau de microcanaux auquel les molécules sonde qui sont liées au biomolécules en tant qu'objets à récupérer sont fixées.

2. Procédé de récupération de biomolécules selon la revendication 1, comprenant, après l'étape de découpe, récupérer les biomolécules en traitant chimiquement la pièce découpée du substrat de façon à couper la liaison entre les molécules sonde et les biomolécules en tant qu'objets à récupérer.

3. Procédé selon la revendication 1 ou 2, dans lequel le réseau de microcanaux comprend :
un composant de réseau de microcanaux comprenant un premier substrat (1) en un matériau tendre qui peut être facilement coupé avec un outil aiguisé, sur lequel le microcanal (2) est disposé ; et
un second substrat (5) combiné au composant de réseau de microcanaux, le second substrat (5) ayant des saillies périodiques (4) de dimensions propres à être montées dans le microcanal (2) du composant de réseau de microcanaux, le procédé comprenant en outre :
avant l'étape de découpe, séparer le substrat ayant des saillies périodiques (4) du composant de réseau de microcanaux.
